# EUROPEAN PATENT APPLICATION

(11) **EP 2 100 836 A1**
(43) Date of publication of application: **16.09.2009**
(21) Application number: 08004873.9
(22) Date of filing: 14.03.2008
(51) Int. Cl.: B65G 69/18

(54) **Releasable coupling device for transferring material between two containers**

(71) Applicant: VALVENGINEERING S.R.L., 55100 Lucca (IT)
(72) Inventor: Dovichi, Alfredo, S. Giusto di Compito 55060 Capannori (LU) (IT)
(74) Representative: Celestino, Marco

(57) **Abstract**

Releasable coupling device for temporarily connecting a first chamber (1), or withdrawal chamber, having a tubular inlet port (1a), and a second chamber (2), or delivery chamber, having a second tubular inlet port (2a), with the two ports that adhere along a contact line (3). The coupling device comprises a stopping member (10) movable between a closed configuration in which the chambers (1, 2) are isolated from each other and an open configuration in which the chambers (1, 2) are in communication with each other. The stopping member (10) consists of a first part (11) and a second part (12) mounted respectively at the tubular outlet port (1a) and the tubular inlet port (2a). Furthermore, a seal member (15) is provided comprising a first part (15a) arranged between the first part (11) and the inner surface of the withdrawal chamber (1) and a second portion (15b) arranged between the second part (12) and the inner surface of the delivery chamber (2). In particular, the first portion (15a) comprises a fixed portion (17) next to the inner surface of the chamber (1) and a movable portion (16) adapted to move from a first position, in which it is adjacent to the fixed portion (17) to a second position, in which it is interposed between the second part (15b) of the seal member (15), at the contact line (3), and the passage (4).

## Description

### Field of the invention.

The present invention relates to a releasable coupling device for transferring material between two containers, such as reservoirs, ducts, machines, etc., in particular, of chemical and pharmaceutical plants.

### Description of the prior art.

As well known, in the chemical and pharmaceutical plants resilient seal members exist, in particular elastomeric seals, which are arranged at the connection between ducts, or machines, through which the movement of the material occurs, normally loose material in the form of powder, for example pharmaceutical products.

In particular, in the above described plants the need is often felt to connect momentarily two chambers such as parts of machine, or of ducts, which are eventually separated at the end of the step of transferring the material from one chamber to the other.

This is made, for example, by means of coupling devices of various types such as plugs, guillotine valves, butterfly valves etc., which usually are associated on the periphery to an external seal to ensure tightness and to prevent the material from exiting in the outer environment during the transfer. However, all the systems above described for connecting momentarily two chambers have the drawbacks hereinafter described with reference to figures from 1 to 4.

The butterfly valves can be made in two halves 111 and 112 that are mounted at the inlet duct 104 and outlet duct 103 of respective chambers 1 and 2. More in detail, first part 111 of the butterfly valve is mounted at the tubular outlet duct 103 of chamber 1 from which the material is drawn. First part 112 is, instead, mounted at the tubular inlet duct 104 of delivery chamber 2 into which the material should be transfer.

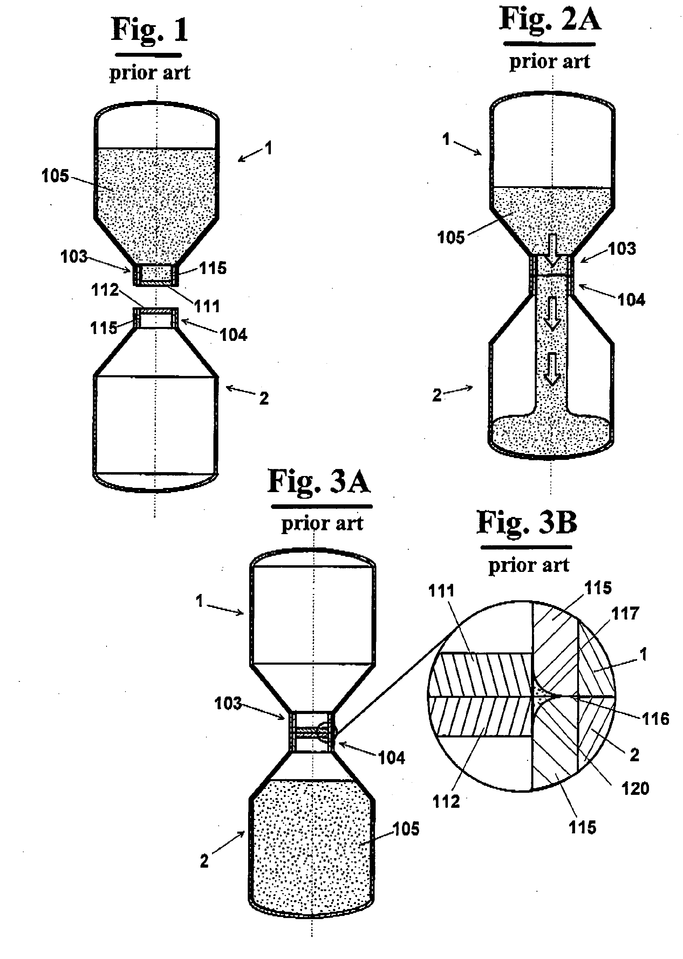

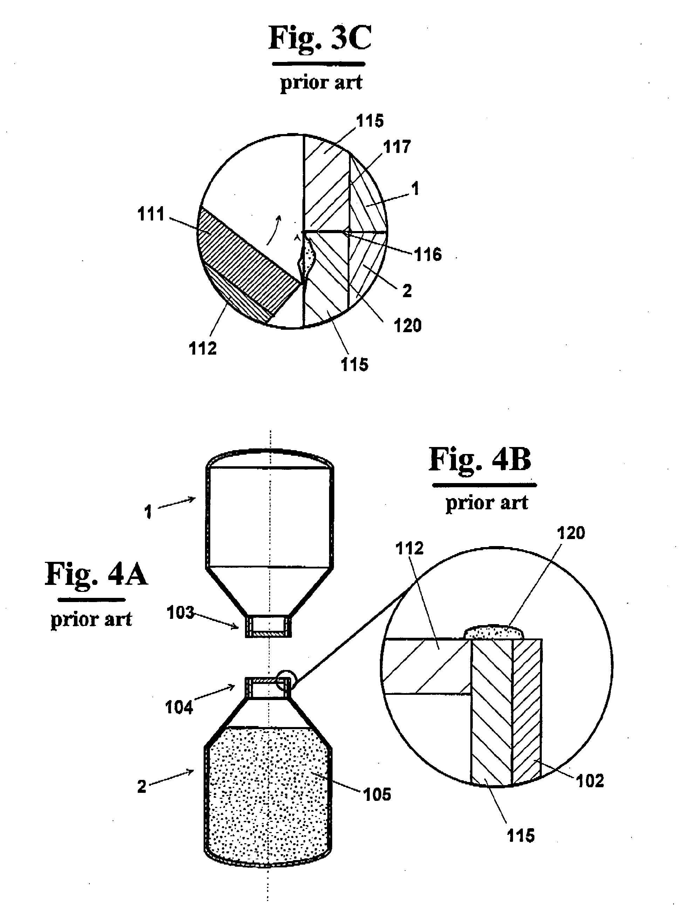

When the chambers 1 and 2 and the respective halves 111 and 112 are coupled for transferring the material from one chamber to the other, the butterfly valve formed by the two matching half-members and is capable of moving from an open configuration, which allows the material to move between the two chambers (figure 2), to a closed configuration, which prevents instead the material to move from one chamber to the other closing any access to the material(figure 3A).

The tightness is achieved by arranging a seal 115 between each half-member 111, or 112, and the corresponding duct 103, or 104. This way, when the two chambers 1 and 2 are coupled, the seals 115, which are arranged at the ducts 103, 104 have a contact line 116.

While transferring the material from chamber 1 to chamber 2 a certain an amount of material is retained between the surfaces of the elastomeric seals 115.

Therefore, the butterfly valve, when passing from the open configuration to the closed configuration, scrapes a part of material from the surfaces of the seals and pushes it against them. This causes the material to escape forcing elastically into the gap 117 present at the contact line of the seals (figure 3B). Then, when chambers 1 and 2 are separated and isolated from each other (figure 4), the material 120 accumulated in the gap 117, as above described, is located out of the two chambers polluting the environment around (figure 4B).

This causes that at the end of the production process, the material exited from the chambers is removed from the plant as waste material with subsequent loss, in particular in case of pharmaceutical plants, owing to the high costs of the involved starting material, and for the need of treating the waste material in controlled dumps.

### Summary of the invention

It is therefore a feature of the present invention to provide a releasable coupling device used for transferring material, in particular, loose powder material, from one chamber to another, to prevent the material from exiting into the environment when separating the two chambers.

It is another feature of the present invention to provide such a releasable coupling device to prevent the material from exiting when manoeuvring the device from one chamber to another.

It is a further particular feature of the present invention to provide such a releasable coupling device that can be used in particular in chemical and pharmaceutical plants, for transferring the powder material from one chamber to another.

It is also a feature of the present invention to provide such a releasable coupling device to avoid the drawbacks of the prior art.

These and other features are accomplished with one exemplary releasable coupling device, according to the present invention, for temporarily connecting a first and a second chamber for transferring material from one chamber to another chamber, said first and second chamber having a first and a second tubular port adapted to be put against each other along a contact line in order to form a passage through which said transferring material is caused to pass, said coupling device comprising:
- a stopping member that can be moved between a closed configuration, in which said first and said second chamber are insulated, and an open configuration, in which said first and said second chamber are in communication between each other through said ports to let the material to pass from said first to said second chamber through said passage;
- a seal member located between said stopping member and the inner surface of at least one among said first and said second tubular port;
whose main feature is that said seal member comprises a fixed portion next to said inner surface of said chamber and a movable portion adapted to move from a first position, in which it is adjacent to said fixed portion to a second position, in which it covers the contact line with respect to the passage.

Advantageously, the seal member comprises:
- a first part arranged between the stopping member and the inner surface of the first tubular port;
- a second part arranged between the stopping member and the inner surface of the second tubular port;
said movable portion that is adapted to move from the first to the second position belongs to said first part.

Preferably, the seal member has a base portion from which the movable portion and the fixed portion extend. In particular, the movable portion has a free end adapted to rotate with respect to the base portion when passing from the first to the second position.

In particular, the stopping member, in the closed configuration, compresses resiliently the movable portion keeping it in the first position, the stopping member in the open configuration disengaging, instead, the movable portion that moves to the second position.

Alternatively, the movable portion and the fixed portion can be two separate bodies movable independently from each other.

Furthermore, suction means can be arranged adapted to provide a suction flow that causes the movable portion to move from the second position, in which it covers the contact line with respect to the passage, to a third position, in which it remains on the contact line and on the surface that defines laterally the passage.

Advantageously, the suction means acts in the second chamber and the movable portion, at the third position, remains on the surface of the second part of the seal member.

This way, the movable portion is constrained in a position that does not interfere when transferring the material from one chamber to the other.

In particular, said fixed portion and said movable portion can define a recess, said movable portion isolating said recess from said passage at said first position, said movable portion bringing then in communication said recess with said passage at said second position.

When moving from said closed configuration to said open configuration, the free end of said movable portion enters into contact with a face of said stopping member determining on it a scraping action. This allows removing in an effective way the material distributed on the above described face of the stopping member and isolating it in the corresponding chamber such that it can be recovered for returning it back into the production plant.

In particular, for increasing the efficiency of the scraping action, the free end of the movable portion can be equipped with a knurled scraping surface.

Notwithstanding the above, during the movement of the stopping member from the open configuration to the closed configuration, the combined action of the stopping member and of the movable portion of the seal member brings a part of the material to accumulate in the above described recess from which it can be recovered for being reintegrated in the plant.

In one form of the invention, the movable portion, when passing from said second to said first position detaches from said fixed portion falling in the chamber from which it can be eventually withdrawn. In this case, the seal member is of disposable type and is then replaced at each new cycle of transferring the material between the two chambers.

Advantageously, actuating means are provided operatively connected to said movable portion, said actuating means driving the movement of said movable portion from said first to said second position, or vice-versa.

In particular, said stopping member moves from said closed configuration to said open configuration, or vice-versa, by a movement selected from the group comprised of:
- a rotation;
- a translation;
- a combination thereof.

Advantageously, the stopping member turns from the closed configuration to the open configuration, or vice-versa, operated by an manoeuvring arm.

In particular, the manoeuvring arm can be arranged in a housing made within an elastomeric material. This way, during the action of the manoeuvring arm in the chamber is ensured the maintenance of the necessary sterility conditions.

Furthermore, the stopping member and the movable portion have mutual engagement elements adapted to constrain the movable portion to the stopping member at the first position, whereby the stopping member when passing from the closed configuration to the open configuration causes the movement of said movable portion from the first to the second position.

Advantageously, the seal member can be made of elastomeric material.

In particular, the seal member can be made of an elastomeric shape memory material.

Preferably, the elastomeric material is selected from the group comprised of:
- silicon rubber,
- fluoride silicon rubber,
- perfluorinated elastomers,
- PDMS,
- a combination thereof.

In particular, the fixed portion of the seal member may have a cross section selected from the group comprised of:
- polygonal;
- circular;
- ellipsoidal;
- a combination thereof.

### Brief description of the drawings.

The invention will be made clearer with the following description of an exemplary embodiment thereof, exemplifying but not limitative, with reference to the attached drawings wherein:
- Figures from 1 to 4C show diagrammatically a succession of steps that shows the technical problem observed in the apparatus of the prior art while transferring material from one chamber to another;
- Figures from 5 to 10 show diagrammatically a succession of steps of transferring the material from one chamber to another by the releasable coupling device, according to the invention;
- Figures from 11 to 15 show some possible exemplary embodiments of the releasable coupling device shown in figures from 5 to 10;

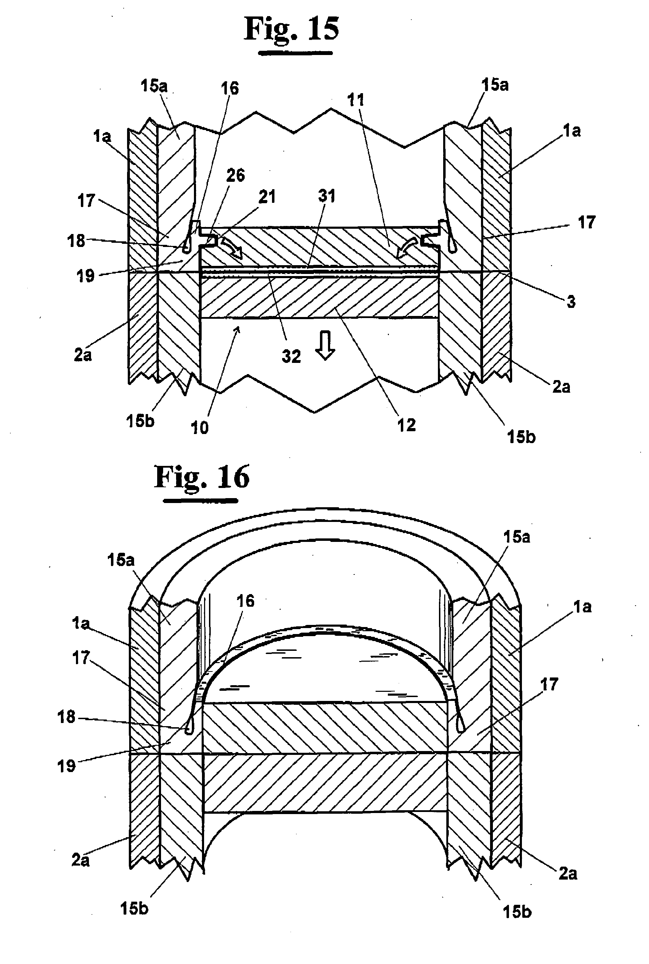

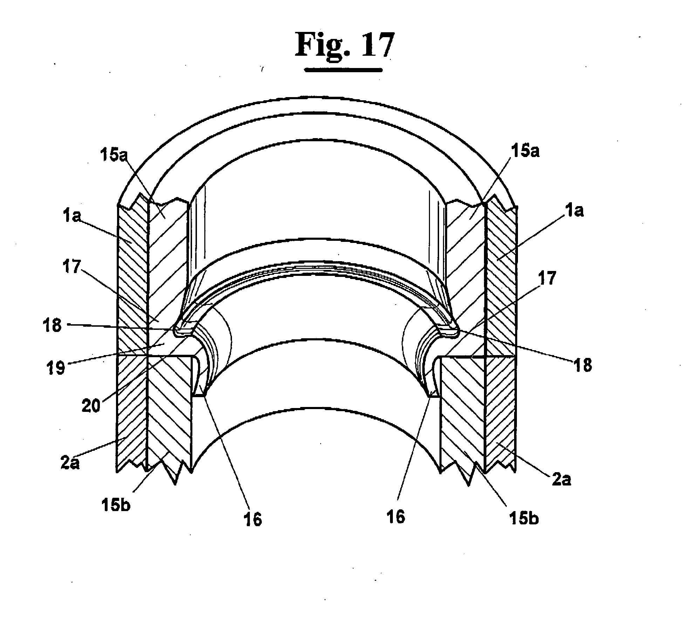

- Figures 16 and 17 show cross sectional views of the releasable coupling device, according to the invention, respectively in a closed configuration and in an open configuration.

### Description of preferred exemplary embodiments.

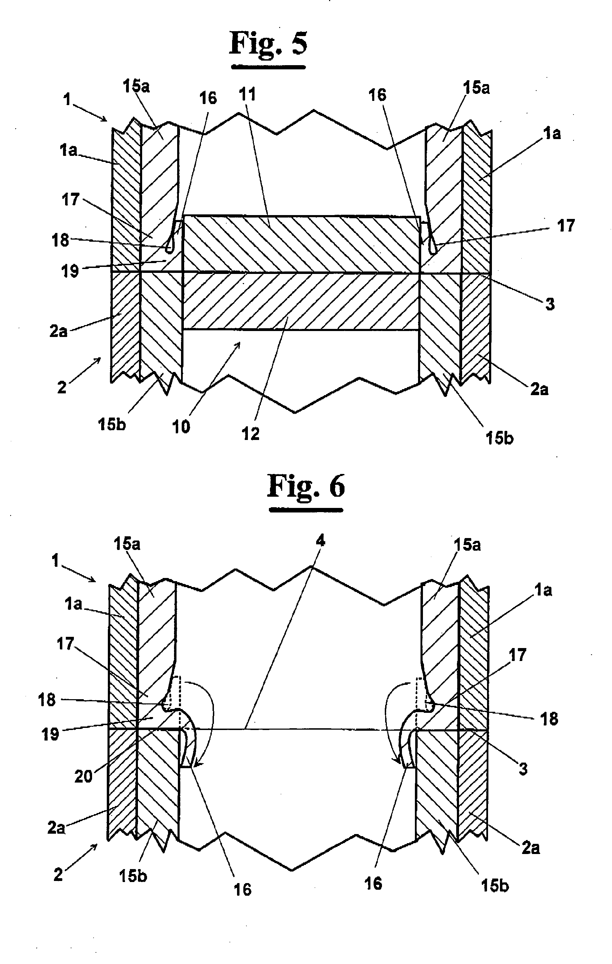

As diagrammatically shown in figure 5, a releasable coupling device, according to the present invention, is adapted to connect temporarily a first chamber 1, or withdrawal chamber, having a tubular outlet duct 1a and a second chamber 2, or delivery chamber, having a tubular inlet duct 2a, with the two ports 2a and 2b that adhere along a contact line 3. The releasable coupling device comprises a stopping member 10 consisting of a first part 11 and a second part 12. More in detail, first part 11 of the stopping member is mounted in the tubular outlet duct 1a of chamber 1 from which the material is drawn, whereas second part 12 is mounted in the tubular inlet duct 2a of chamber 2 to which the material drawn is delivered.

Once connected chambers 1 and 2 at contact line 3, first part 11 and second part 12 are coupled forming stopping member 10 of the coupling device movable between a closed configuration in which the chambers 1 and 2 are insulated (figure 5) and an open configuration in which the chambers 1 and 2 are in communication with each other, such that transfer of material between the two chambers through passage 4 is allowed (figure 6).

The releasable coupling device, comprises, furthermore, a seal member 15, for example of elastomeric shape memory material, comprising a first portion 15a arranged between first part 11 and the inner surface of the withdrawal chamber 1 and a second portion 15b arranged between second part 12 and the inner surface of second chamber 2.

In particular, the first portion 15a of the seal member comprises a fixed portion 17, next to the inner surface of chamber 1, and a movable portion 16 adapted to move from a first position, in which it is adjacent to the fixed portion 17, to a second position, in which it is interposed between the second portion 15b of the seal member 15, at contact line 3, and passage 4. This way, when stopping member 10 is attracts from the closed configuration to the open configuration, the presence of movable portion 16 prevents the material from entering between the two portions 15a and 15b of the seal member at contact line 3.

In the exemplary embodiment shown in figures from 5 to 8, the seal member has a base portion 19 from which movable portion 16 and fixed portion 17 extend.

In particular, stopping member 10, in the closed configuration, compresses resiliently movable portion 16 pressing it against fixed portion 17 in order to keep it in the first position (figure 5).

During the movement of stopping member 10 to the open configuration, movable portion 16 is freed and moves to the second position (figure 6).

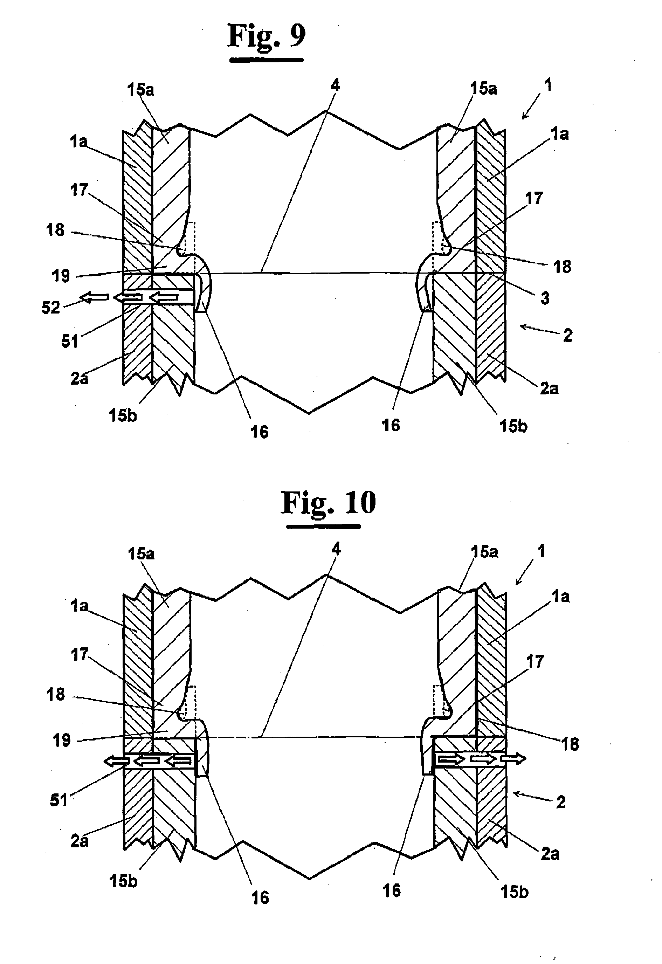

As diagrammatically shown in figures 9 and 10 a suction duct 51 can be, furthermore, provided, for example crossing the walls of delivery chamber 2 and the seal member 15b in pneumatic connection with a suction device, not shown, which generates a suction flow 52. In particular, the suction flow 52 sucks movable portion 16 towards the seal member 15b, causing it to adhere to its surface, i.e. in a position that does not interfere with the flow of transferring material through passage 4.

Between fixed portion 17 and movable portion 16 a recess 18 can be defined. The recess communicates with passage 4 while transferring material from chamber 1 to chamber 2, i.e. when movable portion 16 is in the second position.

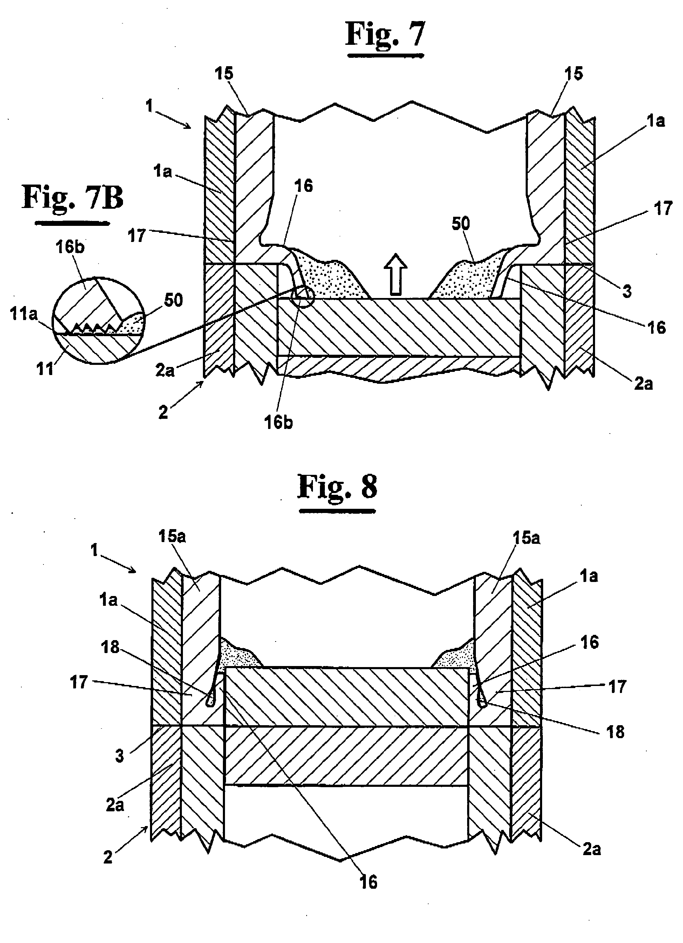

More in detail, when moving from the closed configuration to the open configuration, (figure 7) the free end 16b of the movable portion enters into contact with a face 11a of first part 11 of stopping member 10 determining on it a scraping action. For increasing the efficiency of the scraping action, a free end 16b of movable portion 16 can be equipped with a knurled scraping surface (figure 7B). The combined action of the movable portion 16b and of first part 11 brings away the material 50 from the side surface of passage 4.

A part of the material removed from face 11a remains in recess 18, whereas the other part remains within chamber 1. This way, the material is prevented from escaping in the environment around the chambers 1 and 2 and from contacting the operators. This makes the device, according to the invention, particularly adapted to be used when transferring toxic substances.

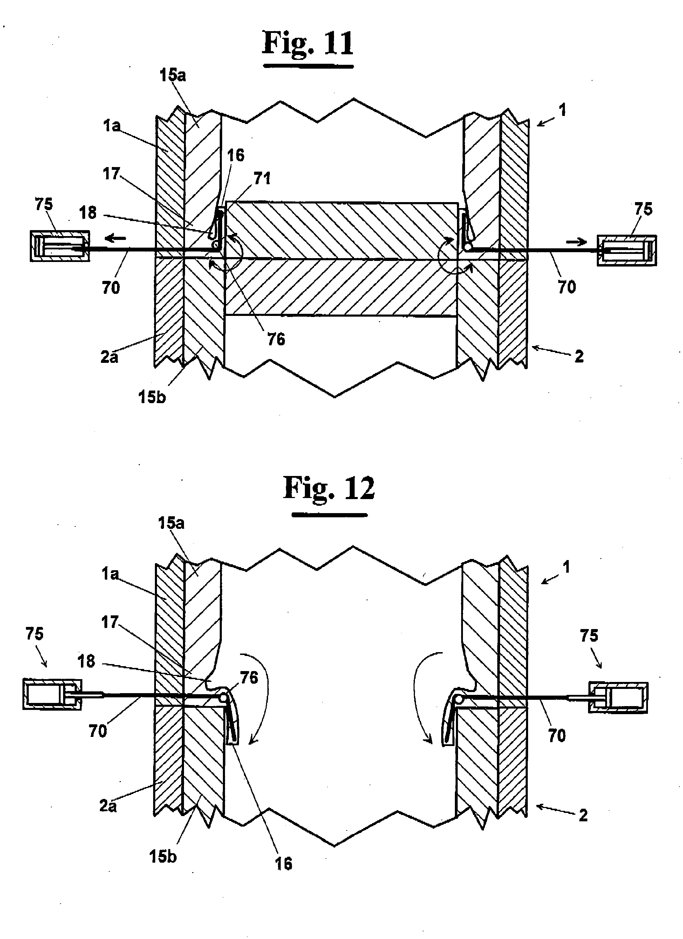

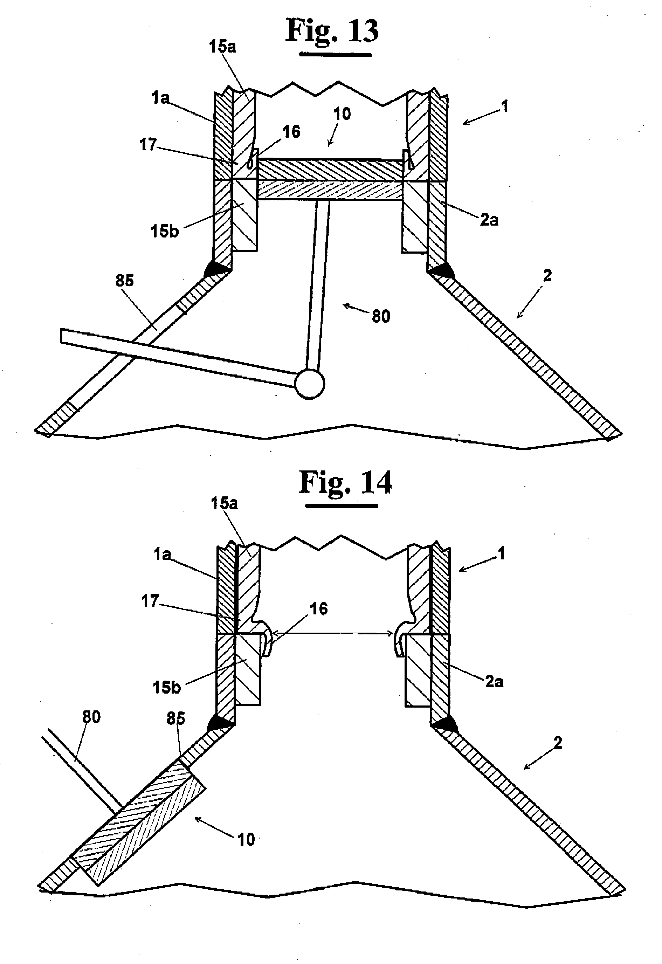

In an exemplary embodiment shown in figures 11 and 12, actuating means are provided operatively connected to the movable portion for bringing it to the first position in the closed configuration of stopping member 10 and to the second position in the open configuration of stopping member 10.

In particular, the actuating means can comprise a resilient cable 70 integral at reference 71 to movable portion 16 operated by an actuator 75 and slidingly mounted on a pulley 76. More in detail, when the resilient cable 70 is pulled by actuator 75, movable portion 16 is in the first position (figure 11), whereas when resilient cable 70 is released movable portion 16 moves to the second position (figure 12).

Furthermore, a manoeuvring arm 80 is provided that guides stopping member 10 between the closed configuration and the open configuration. For example, manoeuvring arm 80 can be put in chamber 2 through a side opening 85 made on the side wall of chamber 2. More in detail, opening 85 is dimensioned such that it can be coupled with stopping member 10, which then is arranged within opening 85 to insulate the chambers 1 and 2 from the outer environment.

As furthermore shown in figure 15, stopping member 10 and movable portion 16 have mutual engagement elements, for example a projection 26 at movable portion 16 and a recess 21 in first part 11, for constraining movable portion 16 to stopping member 10 at the first position, such that stopping member 10 when passing from the closed configuration to the open configuration engages with movable portion 16 bringing it to the second position.

Furthermore, if stopping member 10 is made of a metal material, the two parts 11 and 12 have at the respective contact surfaces inserts of elastomeric material 31 and 32 that ensure the insulation between chamber 1 and chamber 2 when stopper 10 is in the closed configuration.

As shown finally in figures 16 and 17, the coupling device, according to the invention may, have in general a desired geometry according to the cross section in which it is mounted, for example a circular cross section.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Releasable coupling device for temporarily connecting a first and a second chamber for transferring material from one chamber to another chamber, said first and second chamber having a first and a second tubular port adapted to be put against each other along a contact line in order to form a passage through which said transferring material is caused to pass, said coupling device comprising:
- a stopping member that can be moved between a closed configuration, in which said first and said second chamber are insulated, and an open configuration, in which said first and said second chamber are in communication between each other through said ports, to let the material to pass from said first to said second chamber through said passage;
- a seal member located between said stopping member and the inner surface of at least one among said first and said second tubular port;
**characterised in that**
said seal member comprises a fixed portion, next to said inner surface of said chamber, and a movable portion, adapted to move from a first position, in which it is adjacent to said fixed portion, to a second position, in which it covers said contact line with respect to said passage.

2. Releasable coupling device, according to claim 1, wherein said seal member comprises:
- a first part arranged between the stopping member and the inner surface of said first tubular port;
- a second part arranged between said stopping member and the inner surface of said second tubular port;
wherein said movable portion that is adapted to move from the first to the second position belongs to said first part.

3. Releasable coupling device, according to claim 1, wherein said seal member has a base portion from which said movable portion and said fixed portion extend, said movable portion being equipped with a free end adapted to rotate with respect to said base portion when passing from said first to said second position.

4. Releasable coupling device, according to claim 3, wherein said stopping member, in said closed configuration, compresses resiliently said movable portion keeping it in said first position, said stopping member, in said open configuration, disengaging, instead, said movable portion that moves to said second position.

5. Releasable coupling device, according to claim 1, wherein said movable portion and said fixed portion are two distinct bodies movable independently from each other.

6. Releasable coupling device, according to claim 1, wherein said movable portion and said fixed portion define a recess, said movable portion isolating said recess from said passage at said first position, said movable portion bringing then in communication said recess with said passage at said second position.

7. Releasable coupling device, according to claim 1, wherein said free end of said movable portion has a knurled scraping surface.

8. Releasable coupling device, according to claim 1, wherein said movable portion, when passing from said second to said first position detaches from said fixed portion falling in the corresponding chamber.

9. Releasable coupling device, according to claim 1, wherein, furthermore, actuating means are provided operatively connected to said movable portion, said actuating means driving the movement of said movable portion from said first to said second position, or vice-versa.

10. Releasable coupling device, according to claim 1, wherein, furthermore, suction means are provided adapted to provide a suction flow that causes the movable portion to move from said second position, where it covers said contact line with respect to said passage, to a third position, in which it remains on said contact line and on the surface that defines laterally said passage.

11. Releasable coupling device, according to claims 2 and 10, wherein said suction means acts in said second chamber, and wherein said movable portion, in said third position, adheres to the surface of said second part of said seal member.

12. Releasable coupling device, according to claim 1, wherein said stopping member moves from said closed configuration to said open configuration, or vice-versa, by a movement selected from the group comprised of:
- a rotation;
- a translation;
- a combination thereof.

13. Releasable coupling device, according to claim 1, wherein , furthermore, a manoeuvring arm is provided adapted to bring said stopping member from said closed configuration to said open configuration, or vice-versa, said manoeuvring arm being in particular arranged in a housing made in a coating made of elastomeric material.

14. Releasable coupling device, according to claim 1, wherein said stopping member and said movable portion have mutual engagement elements adapted to constrain said movable portion to said stopping member at said first position, such that said stopping member, when passing from said closed configuration to said open configuration, causes said movable portion to pass from said first to said second position.

15. Releasable coupling device, according to claim 1, wherein said seal member is made of elastomeric material, in particular a shape memory material, and preferably selected from the group comprised of:
- silicon rubber,
- fluoride silicon rubber,
- perfluorinated elastomers,
- PDMS,
- a combination thereof.
